# FASCICULE DE BREVET EUROPEEN

(11) **EP 0 665 726 B1**
(45) Date de publication et mention de la délivrance du brevet: **15.09.1999**
(21) Numéro de dépôt: 93913138.9
(22) Date de dépôt: 16.06.1993
(51) Int. Cl.: A47J 37/07

(54) **DISPOSITIF POUR FAIRE ROTIR UN ANIMAL**
VORRICHTUNG ZUM GRILLEN EINES TIERES
DEVICE FOR ROASTING A WHOLE ANIMAL CARCASS

(30) Priorité: 18.06.1992 FR 9207611
(43) Date de publication de la demande: 09.08.1995
(73) Titulaire: BOESSENBACHER, André, 67100 Strasbourg (FR)
(72) Inventeur: BOESSENBACHER, André, 67100 Strasbourg (FR)
(86) Numéro de dépôt international: FR9300583
(87) Numéro de publication internationale: WO9325133

(56) Documents cités:
- DE-A- 1 803 466
- DE-A- 1 952 667
- DE-A- 2 309 483
- GB-A- 1 129 239
- PATENT ABSTRACTS OF JAPAN vol. 11, no. 101 (C-413) & JP-A-61 249 574 ( KAWASAKI MASARU ) 6 Novembre 1986

## Description

La présente invention concerne un dispositif permettant de faire rôtir au charbon de bois un animal entier, notamment un mouton.

La cuisson à la broche traditionnelle du mouton au-dessus d'un foyer comporte des inconvénients comme la mise en contact de la viande avec les fumées, et les problèmes lié au transport des matériels utilisés.

Pour remédier à ces inconvénients, on a proposé divers dispositifs de gril, parmi lesquels celui décrit dans le document DE-A-1 803 466, qui présente la particularité de comporter un foyer vertical de part et d'autre duquel on peut faire griller divers produits grâce à la mise en oeuvre, d'un côté d'une broche et de l'autre côté d'une résistance chauffante également disposée verticalement.

La présente invention vise à proposer un dispositif qui permet de faire rôtir à la broche des animaux, ce dispositif comportant un foyer vertical et présentant l'avantage d'être aisément transportable, et de comporter une isolation thermique isolant la braise du milieu environnant opposé à la broche.

A cet effet le dispositif selon l'invention, tel qu'il se trouve décrit dans la revendication 1 comprend un foyer constitué d'un caisson vertical muni d'une grille frontale, fixé à des pieds supports, un ensemble support de broche fixé sur les parties latérales du foyer et comportant deux supports coulissants entre lesquels est montée une broche munie d'un moteur, et une lèchefrite récupératrice des huiles de cuisson, et il se caractérise essentiellement en ce que le foyer, surmonté d'une grille rabattable, est muni à ses faces postérieure et latérales de moyens d'isolation thermique et en ce que l'ensemble support de broche comprend une planche de travail amovible montée sur les pieds supports, sur lesquels sont montés coulissants les supports de broche. Selon des modes particuliers de réalisation l'isolation thermique peut être constituée de briques réfractaires ou de fibres réfractaires.

La présente invention sera mieux comprise à la lecture de la description qui suit de certains de ses modes de réalisation, description faite en référence aux dessins annexés, parmi lesquels :

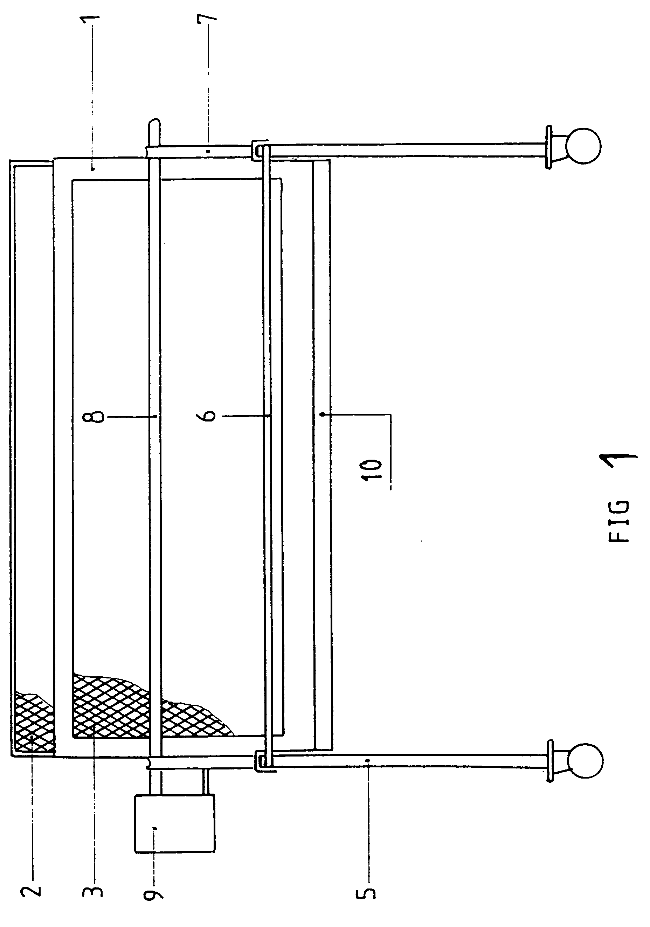

- la figure 1 représente une vue de face d'un dispositif selon l'invention ;

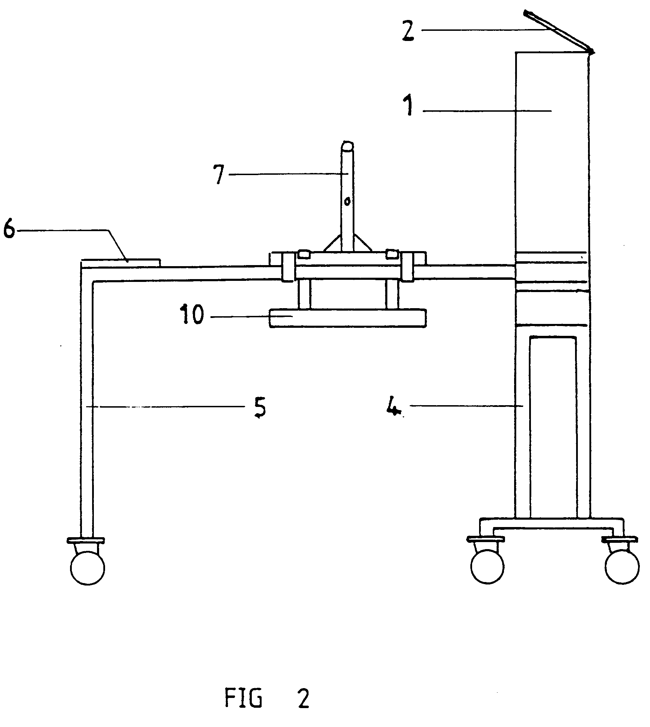

- la figure 2 représente une vue de côté du même dispositif ;

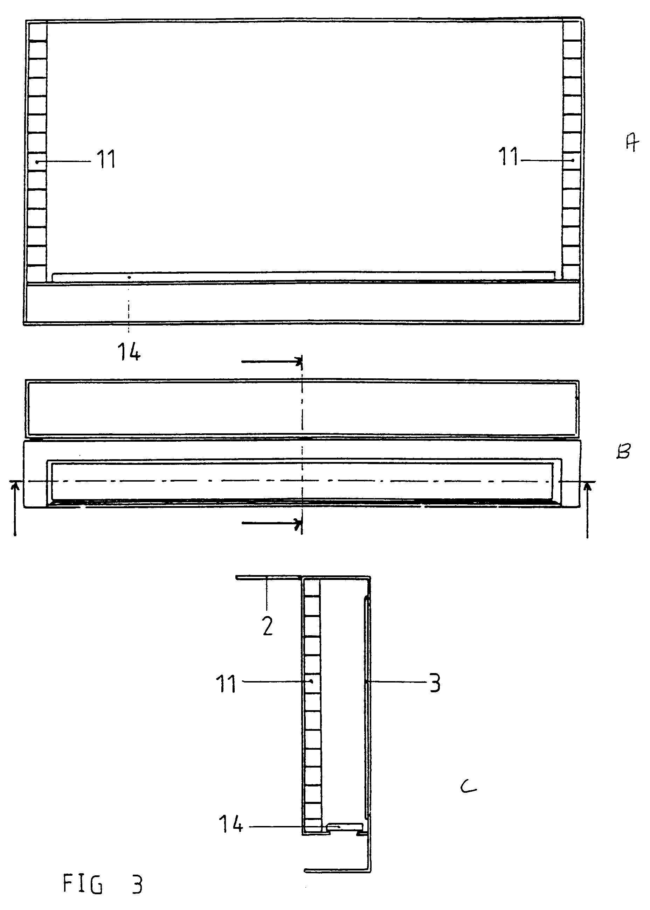

- la figure 3 représente le foyer de ce même dispositif pourvu d'une isolation en briques réfractaires;

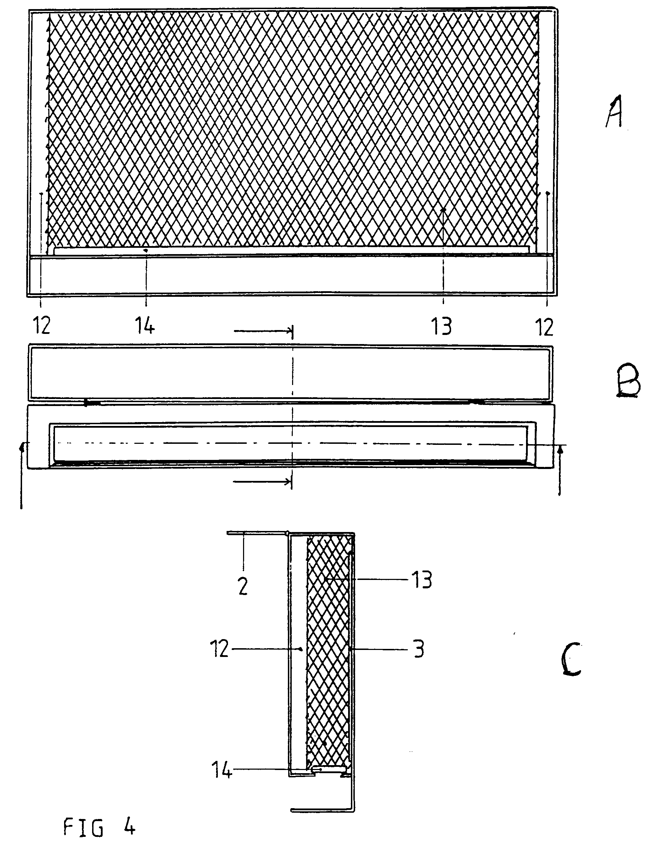

- la figure 4 représente le foyer pourvu d'une isolation en fibres silicoalumineuses.

En référence à ces dessins, on voit que le dispositif selon l'invention comporte un foyer vertical (1) surmonté d'une grille rabattable (2) permettant d'introduire le charbon et de faire griller différents aliments, équipé en face avant d'une grille frontale (3) qui permet de retenir le charbon, et isolé thermiquement grâce à une isolation réalisée à l'aide de briques réfractaires (11) ou de fibres silicoalumineuses (12) disposées sur ses faces latérales et postérieure et maintenues grâce à une tôle déployée (13) en acier inox.

Une plaque de fonte perforée (14) amovible disposée à la base du foyer (1) sert de support pour le charbon, qui est directement posé dessus.

Deux pieds supports de foyer (4), montés sur roulettes et deux pieds supports de broche (5) également montés sur roulettes et emboitables sur les flans du foyer (1) servent à maintenir d'une part le foyer (1) et d'autre part une planche de travail (6) fixable sur les deux pieds supports de broche (5).

Deux supports de broche (7) montés coulissants sur les pieds supports (5) permettent d'éloigner ou rapprocher le mouton du foyer afin de permettre une meilleure cuisson.

Une broche motorisée (8) actionnée par un

Une broche motorisée (8) actionnée par un moteur (9) de 12 V monté en série avec un réducteur à roue dentée permet de faire tourner le mouton, tandis qu'une lèchefrite (10) solidaire des deux supports de broche coulissants (7) permet de récupérer les huiles de cuisson.

A titre d'exemple non limitatif, le foyer (1) a des dimensions de 80 cm pour la hauteur, 150 cm pour la longueur et 18 cm pour la profondeur et est constitué de tôles inox isolées thermiquement de la braise.

Le dispositif selon l'invention est particulièrement destiné à la cuisson du mouton en plein air, façon méchoui.

## Revendications

1. Dispositif pour faire rôtir un mouton ou tout autre animal, comprenant un foyer (1) constitué d'un caisson vertical muni d'une grille frontale (3), fixé à des pieds supports (4) ; un ensemble support de broche (5, 7) fixé sur les parties latérales du foyer (1) et comportant deux supports (7) entre lesquels est montée une broche (8) munie d'un moteur (9), les supports (7) étant montés coulissants sur des pieds supports (5) ; et une lèchefrite (10) récupératrice des huiles de cuisson ; caractérisé en ce que le foyer (1), surmonté d'une grille rabattable (2), comporte à ses faces postérieure et latérales des moyens d'isolation thermique (11, 12) et en ce que l'ensemble support de broche (5, 7) est constitué de pieds supports (5) amovibles sur lesquels est fixée une planche de travail (6) amovible et sur lesquels sont montés coulissants les supports (7) de la broche (8), lesquels sont solidaires de la lèchefrite (10), les pieds supports (4) de foyer et les pieds supports (5) de broche étant montés sur roulettes amovibles.

2. Dispositif selon la revendication 1 caractérisée en ce que le foyer (1) est constitué de tôles isolées thermiquement de la braise grâce à des fibres réfractaires (11).

3. Dispositif selon la revendication 1 caractérisé en ce que le foyer (1) est constitué de tôles isolées thermiquement de la braise grâce à des briques réfractaires (12) maintenues par une tôle déployée (13).

## Claims

1. Device to roast a sheep or any other animal, said device including a stove (1) formed of a vertical box fitted with a frontal grill (3) fixed to support feet (4), a spit support unit (5, 7) secured to the lateral portions of the stove (1) and comprising two supports (7) between which a spit (8) is mounted fitted with a motor (9), the supports (7) being mounted sliding on support feet (5), and a broiler pan (10) for recovering the cooking oil, characterised in that the stove (1), surmounted by a foldable grill (2), comprises on its lateral and rear faces thermic insulation means (11, 12) and in that the spit support unit (5, 7) is formed of movable support feet (5), a movable work top (6) being secured to the latter, the supports (7) of the spit (8) being mounted sliding on said support feet and integral with the broiler pan (10), the support feet (4) of the stove and the support feet (5) of the spit being mounted on movable castors.

2. Device according to claim 1, characterised in that the oven (1) is formed of steel plates thermically insulated from live coals by refractory fibres (11).

3. Device according to claim 1, characterised in that the stove (1) is formed of steel plates thermically insulated from live coals by refractory bricks (12) kept in place by a deployed steel plate (13).

## Patentansprüche

1. Vorrichtung zum Braten am Spieß eines Hammels oder jeden anderen Tieres, bestehend aus einem Ofen (1), der aus einem vertikalen, mit einem frontalen Gitter versehenen Kasten (3) gebildet wird, der an Stützfüßen (4) befestigt ist; einem auf den Seitenteilen des Ofens (1) befestigter Aufbau zur Stützung des Spießes (5,7), bestehend aus zwei Stützen (7), zwischen denen ein mit einem Motor (9) versehener Spieß (8) angebracht ist, wobei die Stützen (7) verschiebbar auf den Stützfüßen (5) angebracht sind; und einer Tropfschale (10) zum Auffangen des Bratöls; dadurch gekennzeichnet, daß der von einem abklappbaren Gitter (2) überhöhte Ofen (1) an seinen Rück- und Seitenflächen Wärmeisolationsmittel (11, 12) umfaßt, und dadurch, daß der Aufbau zur Stützung des Spießes (5, 7) aus abnehmbaren Stützfüßen (5) gebildet wird, auf denen eine abnehmbare Arbeitsplatte (6) befestigt ist und auf denen die Stützen (7) des Spießes (8) verschiebbar angebracht sind, die mit der Tropfschale (10) fest verbunden sind, wobei die Stützfüße (4) des Ofens und die Stützfüße (5) des Spießes auf abnehmbaren Rollen angebracht sind.

2. Vorrichtung gemäß Anspruch 1, dadurch gekennzeichnet, daß der Ofen (1) aus Blechen besteht, die durch feuerfeste Fasern (11) von der Glut thermisch isoliert werden.

3. Vorrichtung gemäß Anspruch 1, dadurch gekennzeichnet, daß der Ofen (1) aus Blechen besteht, die durch feuerfeste, von einem ausgestreckten Blech (13) gehaltenen Ziegel (12) von der Glut thermisch isoliert werden.
